# EUROPEAN PATENT SPECIFICATION

(11) **EP 2 114 235 B1**
(45) Date of publication and mention of the grant of the patent: **08.08.2012**
(21) Application number: 07849745.0
(22) Date of filing: 07.11.2007
(51) Int. Cl.: A47L 15/00, D06F 29/00, D06F 31/00

(54) **DEVICE FOR WASHING CLOTHS AND DISHES**
GERÄT ZUM WASCHEN VON TEXTILIEN UND GESCHIRR
APPAREIL POUR LAVER LE LINGE ET LA VAISSELLE

(30) Priority: 08.11.2006 IT BO20060756
(43) Date of publication of application: 11.11.2009
(73) Proprietor: Moschettini, Adamira, 40129 Bologna (IT)
(72) Inventor: Moschettini, Adamira, 40129 Bologna (IT)
(86) International application number: PCT/IT2007/000786
(87) International publication number: WO 2008/056395

(56) References cited:
- EP-A- 1 354 999
- WO-A-2006/012793
- WO-A-2006/103700
- US-A- 2 416 616
- US-A- 4 989 426

## Description

### TECHNICAL FIELD

The present invention concerns a device for washing items.

### BACKGROUND ART

Known devices called "washing machines" substantially aim to washing clothes.

Generally, a washing machine comprises a metal chassis supporting a basket moved by operating means (an electric motor optionally provided with a reducer), washing water feeding means, detergent feeding means, washing water heating means and discharge water draining means. At present, many washing machines can also be provided with a drying device for drying the clothes after washing them (wash-and-dry machines).

The present invention originates from the remark that a dishwashing machine substantially comprises the same mechanical and electrical elements previously mentioned with regard to a washing machine.

Therefore, with a remarkable advantage from the point of view of energy saving and limitation of production costs, thanks to the device object of the present invention it is possible to use the same mechanical elements both for the washing machine and for the dishwashing machine.

In other words, when there is a nearly absolute correspondence between the main elements (pumps, washing water heating boiler, draining system for discharge water, etc.) which are employed both in a washing machine and in a dishwashing machine, it is possible to design a device which could wash (synchronically or diachronically) both clothes (washing machine) and dishes (dishwashing machine).

The advantages of such a device can be summarized in the following points:
- use of a single washing water feeding plant (instead of two), and of a single discharge water draining plant (instead of two);
- use of a single boiler (instead of two) for heating the washing water);
- less hydraulic (only one feeding line for clean water) and electrical connections (only one electrical energy intake);
- smaller volumes if compared to the two separate household appliances, feature which makes the device object of the present invention particularly compact and suitable to be placed in small flats for couples or single persons;
- reduced expense for maintenance and technical assistance;
- thanks to the at least partially synchronic working of washing machine and dishwashing machine it is possible, for example, to use the hot discharge water drained from the washing machine (water having a remarkable caloric content, sometimes 60°C, which otherwise would be sent to the drainage with a huge waste of water and energy) in order to pre-heat the washing water entering the dishwashing machine;
- a smaller metal mass to be scrapped at the end of the life cycle of devices (as known, scrapping has a remarkable cost from the ecological point of view);
- lower production costs and reduced consumption of raw materials (stainless steel for the chassis, copper for electric coils of electric motors, plastic materials for joints, etc.).

Therefore, the present invention is part of an increasingly advanced trend of research related to energy, water and space saving and environmental respect.

It is known that between the twenties and the fifties of the last century, in particular in the USA and in Great Britain, there were some attempts to realize combined household appliances which could be used for washing both clothes and dishes.

Said devices are described, for example, in US 1 590 470, US 2 416 616 and GB 556 500. However, the technical know-how available at the time did not allow to find suitable functional solutions.

For example, US 1 590 470 and US 2 416 616 describe machines which can wash both clothes and dishes. However, in both cases the operator must manually arrange beforehand the housing in a single space of clothes or dishes, inserting in said space the suitable washing elements, obviously after having removed the washing elements which do not belong to that kind of washing.

It is evident that a device of this kind is not practical or suitable to a rational use of household appliances.

In GB 556 500 it is described a device comprising two spaces. A first space is provided for housing and washing the clothes, whereas a second space is provided for washing the dishes. Furthermore, it is provided a single motor which operates the operating means for carrying out both operations at the same time. It is also provided a reducer in order to reduce the number of revolutions of the element apt to wash the clothes.

However, the device described in GB 556 500 does not comprise a clutch between the two operating systems, and therefore both washing elements are always rotated at the same time. Furthermore, this document does not provide for a single washing water feeding group, a single heating group, etc., as well as for any electronic control unit, which, at that time, was quite uncommon, in order to operate the two parts of the device in a suitable way and to optimize the energy consumption.

### DISCLOSURE OF THE INVENTION

Therefore, the object of the present invention is to produce a device for washing items (in particular clothes and dishes) which allows to optimize the energetic resources (water and electricity) of two main household appliances (washing machine and dishwasher).

In particular, the device object of the present invention can be programmed so that it suitably exploits an electric motor having limited power which can operate the washing machine only when the dishwasher is at rest, or vice-versa.

Therefore, according to the present invention it is conceived a device for washing items, in particular clothes and dishes, according to the enclosed claims.

The present invention will be now described with a reference to the only enclosed figure showing a non limiting embodiment of the same.

### BRIEF DESCRIPTION OF DRAWINGS

The only enclosed figure indicates with the reference number 10 a device for washing items according to the present invention.

### BEST MODE FOR CARRYING OUT THE INVENTION

The device 10 comprises an outer coating 11 apt to define an internal space 12 divided in an upper portion 12a, acting as a

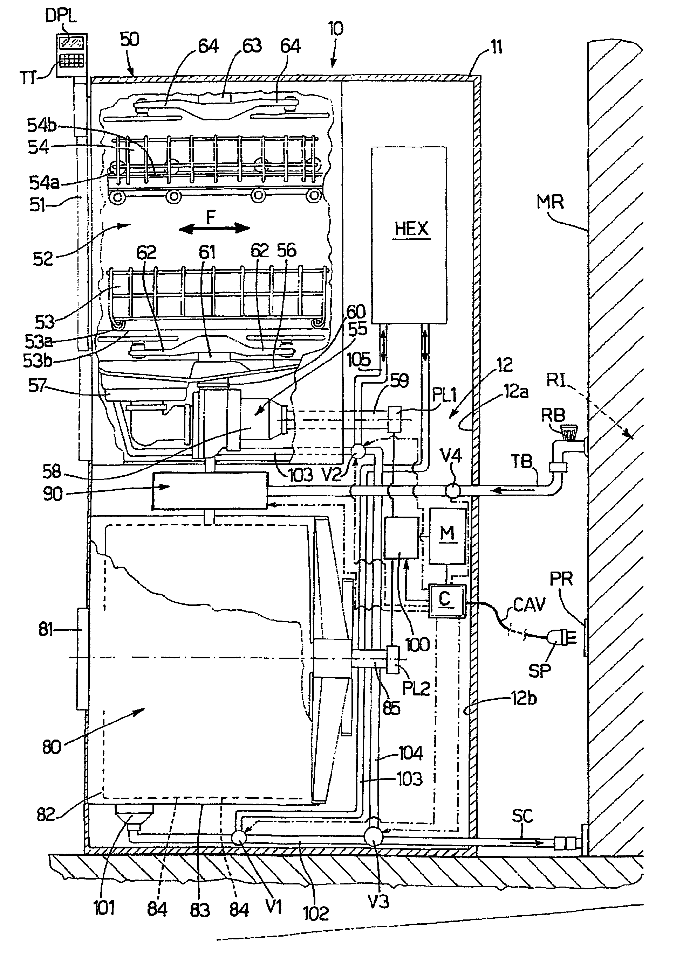

In US-A-4 989 426 (Kretchman et al.) a combination washer/dryer appliance, comprising a clothes washing machine and a dryer assembly, has been described. However in such a document it is not envisaged to use at the same time a clothes washing machine and a dishwashing machine as well. Moreover, such a document is silent on the kind of means controlling the two separate washing machines. dishwashing machine 50, and a lower portion 12b apt to carry out all typical functions of a washing machine 80, which can be coupled, at leisure, with a clothes drying system (not shown). In the particular embodiment shown in the figure, since the dishwasher 50 and the washing machine 80 are contained in the same outer coating 11., they form a single piece which is remarkably space-saving (only one household appliance instead of two).

As known, the dishwashing machine 50 provides for a door 51 allowing the access inside a space 52 housing two dish-holding baskets 53, 54.

Each basket 53, 54 has wheels 53a, 54a, respectively, apt to slide along corresponding guides 53b, 54b following a direction and two senses identified by an double-pointed arrow F in order to partially extract baskets 53, 54 from the door 51, and to load/unload the dishes.

Furthermore, in the lower part of the dishwashing machine 50 there is a pumping group 55 hydraulically connected to a drainage basin 56.

The pumping group 55 comprises a hydraulic element 57 connected to the drainage basin 56 and a pump body 58, comprising inside it a rotor (not shown) splined to a motor shaft 59 coming out from the pump body 58. On the motor shaft 59 it is also splined a first pulley PL1 for purposes which will be better explained hereinafter.

Also a joint 60 comes out from the pump body 58 connecting it to a hydraulic device 61 apt to rotate, in a known manner, arms 62 for the water nebulization (with possibly soaped water) on the dishes placed in the lower basket 53.

Also the upper basket 54 is provided with an analogous hydraulic device 63 and respective arms 64 placed above the upper basket 54 itself.

In a known way, by means of the hydraulic element 57 the pumping group 55 (and its upper homologous 63 by means of a not known suction hose) keeps moving the water falling because of the gravity into the drainage basin 56, feeding it again to the hydraulic devices 61, 63 and then to the nebulization arms 62, 64.

Possible top-up water is taken from a heating plant 90 which, in the particular embodiment represented in the enclosed figure, is placed between the dishwashing machine 50 and the washing machine 80.

Observing the enclosed figure it can be noticed that the heating plant 90 is fed by a single hose TB connected to a hydric network RI by means of the single tap RB protruding from a wall MR.

In a further embodiment of the invention (not shown) the washing machine 50, instead of being provided with a substantially vertical door 51 (as in the embodiment shown in the enclosed single figure) comprises a hinged door formed by a single rigid horizontal element, said horizontal door being apt to allow the entrance from above inside the aforesaid washing machine 50.

Obviously, in this case the washing machine foresees only one dish-holding basket which can be taken out from above. By using a horizontal, hinged and pivotable door of the washing machine the main advantages are represented by the fact that the dishwashing section and the washing section are even more separated and do not involve any dripping of dirty dishes on the front wall of the machine and/or on the clean clothes just coming out from the machine. Furthermore, an easier dish-loading for the user has as a consequence a better filling of the available room. It is evident that this solution does not foresee the use of the hydraulic device 63 and respective arms 64.

In a further embodiment (not shown) the door, besides being horizontal, is also a vanishing door, namely it can be provided with a horizontal rolling shutter formed by linear elements, mutually hinged, which are able to rewind on themselves. Also in this case the result is an improved access from above to the dishwasher inner room. Moreover, the previous loading solution (from above) necessarily involved an empty room above the washing device at least as high as the pivotable hinged door in order to avoid interferences between the door and possible hanging elements, whereas the solution with the rolling shutter door does not foresee such a limitation.

Also this latter embodiment does not foresee the use of the hydraulic device 63 and relevant arms 64.

With regard to the washing machine 80, it is provided in a known way with a porthole 81 which can be opened and allows the entrance into a tub for washing clothes 82 which, on its turn, is placed inside a stationary tub 83 made of stainless steel having a substantially cylindrical shape. Also the tub for washing clothes 82 has a substantially cylindrical shape, is made of stainless steel and has a plurality of openings 84 through which the washing water is fed or expelled, depending on the present washing phase of the washing machine 80.

The tub for washing clothes 82 is mounted on a motor shaft 85, horizontally and substantially parallel to the motor shaft 59, supported by bearings (not shown). Furthermore, a second pulley PL2 is splined on the motor shaft 85.

As shown in the figure, pulleys PL1, PL2 are mechanically connected by means of known methods to a clutch group 100 which- can rotate the first pulley PL1 or the second pulley PL2, or both (see hereinafter).

In fact., the clutch group 100 is mechanically connected to an electric motor M controlled by an electronic control unit C.

The electronic control unit C, on its turn, is electrically fed by an electric cable CAV provided with a plug SP which is inserted in a socket PR placed on the wall MR.

As better explained in the following, the electronic control unit C directs and controls all mechanical and thermal operations, as well as the opening/closing of hydraulic valves present in the device 10.

The water expelled by the washing machine 80 is collected in the bottom of the stationary tub 83 in a collecting basin 101 and sent through a duct 102 towards an outlet SC or by means of a further duct 103, towards a heat exchanger HEX, also inserted in the outer coating 11.

The flow of discharge water from the washing machine 80 is controlled by a valve V1 actuated by the electronic control unit C.

Analogously, the discharge water of the dishwashing machine 50, collected in the hydraulic element 57, is sent by means of a duct 103 towards an outlet SC (through a duct 104) or, by means of a further duct 105, towards the heat exchanger HEX.

The flow of discharge water from the dishwashing machine 50 is controlled by a valve V1 also actuated by the electronic control unit C.

Finally, the draining of discharge water of both the dishwashing machine 50 and the washing machine 80 is controlled by a valve V3 (as usual actuated by the electronic control unit C).

The heat exchanger HEX allows to recover a part of the thermal energy of the re-cycled water, which otherwise would be sent to the drain and therefore definitely wasted.

Therefore, if, for instance, the dishwashing machine 50 has already carried out a washing cycle at high temperatures, the water drained by the dishwashing machine can be used for preheating the water which will be employed for washing clothes in he washing machine 50, or vice-versa.

Therefore, the ducts 103 and 105 allow the water flows towards and from the heat exchanger (HEX) (namely, both entering and coming out of the exchanger HEX).

The water flows entering/coming out from/towards the heat exchanger HEX depend on the present washing phases in the dishwashing machine 50 and the washing machine 80, and are optimized by the electronic control unit C opening/closing valves V1, V2, V3 according to programs previously settled.

Furthermore, in order to reduce the heat exchange time in the exchanger HEX, it is possible to use the "heat pipe" technology.

Moreover, the heat exchanger HEX does not only exchange heat between the re-cycled water of the dishwashing machine 50 and that of the washing machines 80, but it cal also be used for previously heating the water deriving from the hydric network RI before entering the heating plant 90. For the sake of clearness, the hydraulic connections between the water feeding duct TB (controlled by the electronic control unit C by means of a valve V4) and the heat exchanger HEX are not represented in the only enclosed figure.

In a not represented embodiment, instead of the heat exchanger HEX (or in combination with the heat exchanger HEX) it is employed a ultra-filtration device wherein the discharge water of the dishwashing machine 50 or of the washing machine 80 are ultra-filtered and used in a preliminary washing operation in the washing machine 80 or, respectively, in the dishwashing machine 50.

Furthermore, as shown in the figure, besides a single tap RB, a single plug SP, a single socket PR, the device 10 has a single outlet SC to the drainage system (not shown). The elements RB, PR and SC are all installed on the wall MR.

With regard to the clutch group 100 it must be added that it allows to rotate selectively one of the two motor shafts 59, 85 or both of them, according to the washing cycles presently carried out by the washing machine 80 and by the dishwashing machine 50.

As stated before, all operations of water feeding, washing, water moving, drainage of discharge water, management of the heating plant 90, of the heat exchanger HEX, of the valves V1, V2, V3, V4, of the clutch group 100 (and therefore of the motor shafts 59, 85) and of the motor M are directed, controlled and optimized by the electronic control unit C according to programs previously established by the operator by means of a keyboard TT provided with a display DPL.

Moreover, filtering means (not shown) of the discharge water can be shared by the dishwashing machine 50 and the washing machine 80.

In a further embodiment (not shown) the tub for washing clothes has a vertical axis of longitudinal symmetry. Therefore, in this case, the tub for washing clothes is coaxial to the hydraulic devices of the dishwashing machine. Moreover, in this further embodiment the clutch group is advantageously placed between the dishwashing machine and the washing machine. Therefore, both the tub for washing clothes and the nebulization arms selectively rotate around the same vertical axis of longitudinal symmetry according to washing programs carried out by the electronic control unit.

From the aforesaid it is clear that by means of the device 10 object of the present invention it is possible to obtain a remarkable energy saving, to reduce the encumbrance (only one household appliance instead of two), to reduce the number of sockets, to reduce the number of drainage ducts for discharge water, etc.

## Claims

1. Device (10) for washing items, comprising a first machine (50) and a second machine (80), being
said first machine (50) a dishwashing machine (50), and said second machine (80) a clothes washing machine (80);
said dishwashing machine (50) and said clothes washing machine (80) comprising:
- partaking means (M, 100) for operating the moving parts of said dishwashing machine (50) and said clothes washing machine (80), said partaking means (M, 100) being used in common by said dishwashing machine (50) and said clothes washing machine (80), said device being **characterized by**
- partaking means (RB, TB) for feeding clean water, said partaking means (RB, TB) being used in common by said dishwashing machine (50) and said clothes washing machine (80);
- partaking means (SC) for draining the discharge water, said partaking means (SC) being used in common by said dishwashing machine (50) and said clothes washing machine (80);
- partaking means (90) for heating the water, said partaking means (90) being used in common by said dishwashing machine (50) and said clothes washing machine (80); and
said partaking means (RB; TB; SC; 90; M, 100), used in common by said dishwashing machine (50) and said clothes washing machine (80), being directed and controlled by electronic means (C) for optimizing the energy and/or water consumption.

2. Device (10) according to Claim 1, **characterized in that** it further comprises a clutch group (100) which is mechanically connected to a motor shaft (59) of said dishwashing machine (50) and a motor shaft (85) of said clothes washing machine (80); said clutch group (100) being directed and controlled by said electronic means (C).

3. Device (10) according to one of the previous Claims, **characterized in that** it comprises only one heating plant (90) for heating the water to be employed both in said dishwashing machine (50) and in said clothes washing machine (80).

4. Device (10) according to Claim 1, **characterized in that** it further comprises means (HEX) to carry out heat exchanges between hydraulic flows from and towards said dishwashing machine (50) and from and towards said clothes washing machine (80).

5. Device (10) according to Claim 4, **characterized in that** said means (HEX) apt to carry out heat exchanges comprise heat pipes.

6. Device (10) according to Claim 4 or Claim 5, **characterized in that** said means (HEX) are also apt to carry out heat exchanges between water coming from a hydric network fed into the device (10) and hydraulic flows from and towards said clothes washing machine (80).

7. Device (10) according to Claim 1 or Claim 4, **characterized in that** it comprises a ultra-filtration device wherein the discharge water of the dishwashing machine (50) or of the clothes washing machine (80) are ultra-filtered and employed in a preliminary washing operation in the clothes washing machine (80) or, respectively, in the dishwashing machine (50).

8. Device (10) according to Claim 1, **characterized in that** said electronic means (C) are apt to carry out washing cycles wherein, while at least a part of the mechanical means (PL1, 59) of the dishwashing machine (50) is off, at least a part of the mechanical means (PL2, 100) of the clothes washing machine (80) is on, or vice-versa.

9. Device (10) according to Claim 1, **characterized in that** said dishwashing machine (50) and said clothes washing machine (80) are contained in a single outer coating (11) in order to create a single piece.

10. Device (10) according to claim 1, **characterized in that** a tub for washing clothes of said clothes washing machine (80) is coaxial to the hydraulic devices of said dishwashing machine (50) so that both the tub for washing clothes and the water nebulization means in said dishwashing machine (80) selectively rotate around the same vertical axis of longitudinal symmetry according to washing programs controlled by said electronic means (C).

11. Device (10) according to Claim 1, **characterized in that** the dishwashing machine (50) comprises a hinged and pivotable door formed by a single horizontal rigid element.

12. Device (10) according to Claim 1, **characterized in that** said dishwashing machine (50) comprises a horizontal, vanishing door provided with a horizontal rolling shutter formed by linear elements, mutually hinged, which are able to rewind on themselves.

13. Device (10) according to Claim 11 or Claim 12, **characterized in that** the dishwashing machine (50) comprises only one dish-holding basket which can be taken out from above.

## Patentansprüche

1. Vorrichtung (10) zum Waschen von Gegenständen, umfassend eine erste Maschine (50) und eine zweite Maschine (80); wobei die erste Maschine (50) eine Geschirrspülmaschine (50) ist, und die zweite Maschine (80) eine Wäschewaschmaschine (80) ist; wobei die Geschirrspülmaschine (50) und die Wäschewaschmaschine (60) umfassen:
- mitbeteiligte Mittel (M, 100) zum Betreiben der beweglichen Teile der Geschirrspülmaschine (50) und der Wäschawaschmaschine (80), wobei die genannten mitbeteiligte Mittel (M, 100) gemeinsam von der Geschirrspülmaschine (50) und der Wäschewaschmaschine (80) verwendet werden, indem die genannte Vorrichtung durch:
- mitbeteiligte Mittel (RB, TB) zum Zuführen sauberes Wasser, wobei die genannten mitbeteiligte Mittel (RB, TB), gemeinsam von der Geschirrspülmaschine (50) und der Wächewaschmaschine (80) verwendet werden;
- mitbeteiligte Mittel (SC) zum Ablassen der Abwasser, wobei die genannten mitbeteiligten Mittel (SC) gemeinsam von der Geschirrspülmaschine (50) und der Wäschewaschmaschine (80) verwendet werden;
- mitbeteiligte Mittel (90) zum Erwärmen des Wassers, wobei die genannten mitbeteiligte Mittel (SC) gemeinsam von der Geschirrspülmaschine (50) und der Wäschewaschmaschine (80) verwendet werden;
die genannten mitbeteiligten Mittel (RB; TB; SC; 90; M, 100), die gemeinsam von der Geschirrspülmaschine (50) und der Wäschewaschmaschine (80) verwendet werden, wobei sie durch elektronische Mittel (C) für die Optimierung vom Energie- und/oder Wasserverbrauch geführt und gesteuert sind; gekennzeichnet ist.

2. Vorrichtung (10) nach Anspruch 1, **dadurch gekennzeichnet, dass** sie ferner eine Kupplungsgruppe (100) aufweist, die mechanisch mit einer Motorwelle (59) der Geschirrspülmaschine (50) und einer Motorwelle (85) der Wäschewaschmaschine (80) verbunden ist, wobei die Kupplungsgruppe (100) von den elektronischen Mittel (C) geführt und gesteuert ist.

3. Vorrichtung (10) nach einem der vorhergehenden Ansprüchen, **dadurch gekennzeichnet, dass** sie nur eine Heizanlage (90) zum Erhitzen des Wassers sowohl in der Geschirrspülmaschine (50) als auch in der Wäschewaschmaschine (80) aufweist

4. Vorrichtung (10) nach Anspruch 1, **dadurch gekennzeichnet, dass** sie ferner Mittel (HEX) zur Durchführung eines Wärmeaustausches zwischen hydraulischen Strömungen von und zu der Geschirrspülmaschine (50) und von und zu der Wäschewasohmaachine (80) aufweist.

5. Vorrichtung (10) nach Anspruch 4, **dadurch gekennzeichnet, dass** die genannten Mittel (HEX), die zu einem Wärmeaustausch geeignet sind, Wärmerohre (heatpipes) aufweisen.

6. Vorrichtung (10) nach Anspruch 4 oder 5, **dadurch gekennzeichnet, dass** die genannten Mittel (HEX) auch geeignet zur Durchführung eines Wärmeaustausches zwischen Wasser, das aus einem mehrwertigen Netzwerk in die Vorrichtung (10) strömt, und hydraulischen Strömungen von und zu der Wäschewaschmaschine (80), sind.

7. Vorrichtung (10) nach Anspruch 1 oder 4, **dadurch gekennzeichnet, dass** sie eine Ultrafiltration-Vorrichtung aufweist, bei der die Entladungswasser der Geschirrspülmaschine (50) oder der Wäschewaschmaschine (80) ultra-filtriert sind und in einer vorläufigen Wasch-Operation in den Waschewaschmaschine (80) bzw. in der Geschirrspülmaschine (50) eingesetzt werden.

8. Vorrichtung (10) nach Anspruch 1, **dadurch gekennzeichnet, dass** die genannten elektronische Mittel (C) zur Durchführung Waschzyklen geeignet sind, bei den während zumindest ein Teil der mechanischen Mittel (PL1, 59) der Geschirrspülmaschine (50) abgeschaltet ist, wenigstens ein Teil der mechanischen Mittel (PL2, 100) der Wäschewaschmaschine (80) angeschaltet ist, oder umgekehrt.

9. Vorrichtung (10) nach Anspruch 1, **dadurch gekennzeichnet, dass** die genannte Geschirrspülmaschine (50) und die genannte Wäschewaschmaschine (80) in einem einzigen äußeren Überzug (11) enthalten sind, um ein einziges Stück zu bildern.

10. Vorrichtung (10) nach Anspruch 1, **dadurch gekennzeichnet, dass** eine Wanne zum Waschen von Kleidungen der genannten Wäschewaschmaschine (80) koaxial zu den Hydraulikeinrichtungen der genannten Geschirrspülmaschine (50) ist, so daß sowohl, die Wanne zum Waschen von Kleidungen als auch die Wasserzerstäubungsmittel in der genannten Geschirrspülmaschine (80) selektiv in der gleichen vertikalen Achse der Längsmittelebene nach vorbestimmten Waschprogrammen drehen, und von den elektronischen Mittel (C) gesteuert werden.

11. Vorrichtung (10) nach Anspruch 1, **dadurch gekennzeichnet, dass** die Geschirrspülmaschine (50) eine drehbare und schwenkbare Tür umfasst, die durch ein einziges horizontales starres Element ausgebildet ist.

12. Vorrichtung (10) nach Anspruch 1, **dadurch gekennzeichnet, dass** die genannte Geschirrspülmaschine (50) eine horizontale versenkbar Tür aufweist, die mit einem horizontalen Rolladen bestückt ist, der durch gelenkig miteinander verbundenen linearen Elementen ausgebildet ist, die sich wieder umwickeln können.

13. Vorrichtung (10) nach Anspruch 11 oder 12, **dadurch gekennzeichnet, dass** die Geschirrspülmaschine (50) nur einen Geschirrhaltekorb umfasst, der von oben abgenommen werden kann.

## Revendications

1. Dispositif (10) pour laver des articles, comprenant une première machine (50) et une deuxième machine (80); étant ladite première machine (50) un lave-vaisselle (50), et ladite deuxième machine (80) un lave-linge (80); ledit lave-vaisselle (50) et ledit lave-linge (80) comprenant:
- des moyens coparticipants (M, 100) pour actionner les éléments mobiles dudit lave-vaisselle (50) et dudit lave-linge (80), lesdits moyens coparticipants (M, 100) étant utilisés en commun par ledit lave-vaisselle (50) et ledit lave-linge (80), ledit dispositif étant **caractérisé par**:
- des moyens coparticipants (RB, TB) pour alimenter de l'eau propre, lesdits moyens coparticipants (RB, TB) étant utilisés en commun par ledit lave-vaisselle (50) et ledit lave-linge (80);
- des moyens coparticipants (SC) pour drainer l'eau de décharge, lesdits moyens coparticipants (RB, TB) étant utilisés en commun par ledit lave-vaisselle (50) et ledit lave-linge (80);
- des moyens coparticipants (90) pour chauffer l'eau, lesdits moyens coparticipants (RB, TB) étant utilisés en commun par ledit lave-vaisselle (50) et ledit lave-linge (80);
lesdits moyens coparticipants (RB; CT; SC; 90; M, 100), utilisés en commun par ledit lave-vaisselle (50) et ledit lave-linge (80) étant dirigés et contrôlés par des moyens électroniques (C) pour l'optimisation de la consommation d'énergie et/ou de l'eau.

2. Dispositif (10) selon la revendication 1, **caractérisé en ce qu'**il comprend en outre un groupe d'embrayage (100) qui est relié mécaniquement à un arbre moteur (59) dudit lave-vaisselle (50) et à un arbre moteur (85) dudit lave-linge (80); ledit groupe d'embrayage (100) étant dirigé et commandé par lesdits moyens électroniques (C).

3. Dispositif (10) selon l'une quelconque des revendications précédentes, **caractérisé en ce qu'**il comprend un seul système de chauffage (90) pour chauffer l'eau qui doit être utilisé à la fois dans ledit lave-vaisselle (50) et dans ledit lave-linge (80).

4. Dispositif (10) selon la revendication 1, **caractérisé en ce qu'**il comprend en outre des moyens (HEX) pour effectuer des échanges de chaleur entre les écoulements hydrauliques de et vers ledit lave-vaisselle (50) et de et vers ledit lave-linge (80).

5. Dispositif (10) selon la revendication 4, **caractérisée en ce que** lesdits moyens (HEX) aptes à effectuer des échanges de chaleur comprennent des tubes échangeurs de chaleur (heatpipes).

6. Dispositif (10) selon la revendication 4 ou 5, **caractérisé en ce que** lesdits moyens (HEX) sont également aptes à effectuer des échanges de chaleur entre l'eau provenant d'un réseau hydrique introduit dans le dispositif (10) et des flux hydrauliques de et vers ledit lave-linge (80).

7. Dispositif (10) selon les revendications 1 ou 4, **caractérisé en ce qu'**il comprend un dispositif d'ultrafiltration dans lequel les eaux de décharge du lave-vaisselle (50) ou du lave-linge (80) sont ultra-filtrés et utilisés dans une préalable opération de lavage dans le lave-linge (80) ou, respectivement, dans le lave-vaisselle (50).

8. Dispositif (10) selon la revendication 1, **caractérisé en ce que** lesdits moyens électroniques (C) sont aptes à effectuer des cycles de lavage, dans lesquels, tandis qu'au moins une partie des moyens mécaniques (PL1, 59) du lave-vaisselle (50) est désactivé, au moins une partie des moyens mécaniques (PL2, 100) du lave-linge (80) est activé, ou vice-versa.

9. Dispositif (10) selon la revendication 1, **caractérisé en ce que** ledit lave-vaisselle (50) et ledit lave-linge (80) sont contenus dans un seul revêtement extérieur (11) afin de créer une seule pièce.

10. Dispositif (10) selon la revendication 1, **caractérisé en ce que** une baignoire pour laver le linge dudit lave-linge (80) est coaxial à des dispositifs hydrauliques dudit lave-vaisselle (50) de sorte que soit la baignoire pour laver le linge que les moyens de nébulisation de l'eau dans ledit lave-vaisselle (80) tournent sélectivement autour du même axe vertical de symétrie longitudinale selon l'une des programmes de lavage contrôlées par lesdits moyens électroniques (C).

11. Dispositif (10) selon la revendication 1, **caractérisé en ce que** le lave-vaisselle (50) comprend une porte articulée et pivotante formée par un seul élément rigide horizontal.

12. Dispositif (10) selon la revendication 1, **caractérisé en ce que** ledit lave-vaisselle (50) comprend une porte escamotable horizontale pourvue d'un obturateur glissant horizontal formé par des éléments linéaires, mutuellement articulées, qui sont capable de rembobiner sur eux-mêmes.

13. Dispositif (10) selon les revendications 11 ou 12, **caractérisé en ce que** le lave-vaisselle (50) comprend un seul panier de retenue de vaisselle qui peut être retiré de haut.
